# EUROPÄISCHE PATENTSCHRIFT

(11) **EP 1 413 972 B1**
(45) Veröffentlichungstag und Bekanntmachung des Hinweises auf die Patenterteilung: **22.10.2008**
(21) Anmeldenummer: 02023745.9
(22) Anmeldetag: 24.10.2002
(51) Int. Cl.: G06K 9/00

(54) **Prüfung von Bildaufnahmen von Personen**
Examination of images of persons
Examination d'images de personnes

(43) Veröffentlichungstag der Anmeldung: 28.04.2004
(73) Patentinhaber: L-1 Identity Solutions AG, 44801 Bochum (DE)
(72) Erfinder: Gehlen, Stefan, Dr., 44869 Bochum (DE); Werner, Martin, Dr., 58675 Hemer (DE); Brauckmann, Michael, Dr., 58456 Witten (DE)
(74) Vertreter: Grünecker, Kinkeldey, Stockmair & Schwanhäusser Anwaltssozietät

(56) Entgegenhaltungen:
- EP-A- 0 984 386
- WO-A-02/35453
- US-A- 5 963 656
- US-A1- 2001 046 330
- "Frequently asked questions" TELE CONNECT VIDEOSYSTEMEN, XP002226854 Hilversum, Nederland
- PATENT ABSTRACTS OF JAPAN vol. 017, no. 051 (P-1479), 2. Februar 1993 (1993-02-02) & JP 04 264985 A (HAMAMATSU PHOTONICS KK), 21. September 1992 (1992-09-21)
- VISIONICS CORPORATION, NJ, USA: "Facelt Software Developers Kits-Verficiation, Identification, Multiface" 2001, Seiten 1 - 4
- NOBEL, K.R., MITRETEK: "21th Century Facial Recognition Applications"

## Beschreibung

### Gebiet der Erfindung

Die Erfindung betrifft ein Prüfverfahren für Porträtbilder. Vorgegebene Qualitätsanforderungen an ein Porträtbild werden durch Schwellwerte parametrisiert und bei der Durchführung des Verfahrens die Einhaltung der Qualitätsanforderungen über einen Vergleich der ermittelten Kennwerte des Bildes mit den Schwellwerten überprüft. Das Verfahren erlaubt es, objektiv zu prüfen, ob sich ein Porträtbild gemäß zuvor festgelegter Kriterien für eine Personenidentifizierung eignet.

### Stand der Technik

Das älteste und auch heute noch am weitesten verbreitete Verfahren zur Erkennung bzw. Überprüfung der Identität einer Person ist die Gesichtserkennung.

Im Unterschied zu einem Fingerabdruckvergleich, einem Unterschriftsvergleich oder einem genetischen Vergleich ("genetischer Fingerabdruck") ist der bei der Gesichtserkennung erfolgende visuelle Vergleich für jedermann einfach und schnell und ohne technische Hilfsmittel durchzuführen.

Eine Identitätsüberprüfung über Gesichtserkennung erfolgt immer über einen Vergleich zweier Bilder: (1) eines Referenzbildes, das entweder als reales Porträt vorliegt, z.B. in Form eines Ausweisbildes, eines Fahndungsbildes, oder irgendeines anderen Porträtbildes, oder als physisches oder imaginäres Abbild aus der Erinnerung oder einer Beschreibung konstruiert wird, z.B. ein Phantombild, und (2) eines Vergleichsbildes, das mit dem Referenzbild zu vergleichen ist, worauf - je nach Übereinstimmung - die Identität festgestellt oder negiert wird.

Derartige Identitätsüberprüfungen werden in der Regel immer noch durch Personen und nicht maschinell durchgeführt, wie z.B. bei einer Verkehrskontrolle oder einer Passkontrolle, wo das Referenzbild ein Ausweisbild ist und das Vergleichsbild ein imaginäres Abbild, das sich die vergleichende Person vom Gesicht der zu überprüfenden Person macht. Maschinelle Bildverarbeitungsverfahren sind wegen der großen Menge an zu verarbeitender Bildinformation sehr aufwendig und fehleranfällig bei mangelhafter Qualität der zugrundeliegenden Bilder. Es spielen dabei auch Kriterien eine Rolle, die man von vornherein nicht als Qualitätsmerkmal ansehen würde. So ist z.B. die Kopfpose von sehr großer Bedeutung für die Aussagekraft eines maschinellen Bildvergleichs: frontale Bilder eignen sich nach heutigem Stand der Technik viel besser als andere Posen, wie z. B. Halbprofile.

Ob visuell durch eine Person oder maschinell: ein entscheidendes Kriterium für die Aussagekraft einer Identitätsprüfung ist die Qualität der verwendeten Porträtbilder, worunter nicht nur Wiedergabequalitäten wie Auflösung, Bildschärfe, Kontrast, Bildhelligkeit, Verschmutzungsgrad, etc. eine Rolle spielen, sondern auch die Art der Präsentation des abgebildeten Gesichts. Vor allem für maschinelle Verfahren stellen Porträts niedriger Qualität nahezu unüberbrückbare Probleme bei einem Bildvergleich dar.

Die Identitätsprüfung von Personen über Fingerabdrucksvergleich, Unterschriftsvergleich, etc. wird zunehmend durch halbautomatische Verfahren unterstützt oder durch automatisierte Verfahren durchgeführt. Auch hier kommt es auf die Qualität der verwendeten Fingerabdrücke bzw. Unterschriften an. Für Unterschriften beschreibt z.B. die Druckschrift US 6,363,162 A ein System und ein Verfahren zur Prüfung der Qualität von Unterschriften, wobei ein Binärbild des die Unterschrift aufweisenden Dokuments erstellt wird, der Hintergrund von der Unterschrift getrennt wird, und darauf die Unterschrift untersucht und ausgewertet wird. Auf Porträtbilder ließe sich dieses Verfahren aber wegen der ungleich höheren Komplexität dieser Bilder nicht oder nur in sehr eingeschränkter Form übertragen.

Es sind zwar im Bereich der Druck- und Fototechnik Verfahren und Systeme bekannt, die den Kontrast, Farbe und Helligkeit von Bildern automatisch prüfen und gegebenenfalls Korrekturen durchführen. Dies basiert jedoch immer auf Verfahren, die entweder das gesamte Bild oder vorgegebene Bildausschnitte analysieren. Zum Extrahieren von Strukturen oder gar der Identifizierung von Objekten im Bild sind diese Verfahren nicht geeignet.

Ein weiteres Problem ist, dass allgemeine Qualitätskriterien für Porträtbilder nur vage definiert sind und bislang nur durch visuelle Inspektion überprüft werden. So ist z.B. das prinzipielle Aussehen eines deutschen Ausweisbildes anhand von Kriterien und Beispielen festgelegt. Ob jedoch ein solches Bild dann für einen Ausweis zugelassen wird, unterliegt der subjektiven Einschätzung eines oder mehrerer Beamter/Angestellter.

Eine präzisere Definition von Qualitätskriterien ist aber nur dann sinnvoll, wenn deren Einhaltung auch objektiv überprüft werden kann. Eine objektives Kontrollverfahren für Porträtbilder, bei dem geprüft wird, ob ein Bild tatsächlich vorgegebenen Kriterien entspricht oder nicht, ist bislang aber nicht bekannt.

Die EP 0 984 386 A2 offenbart ein Verfahren zur Detektion eines menschlichen Gesichts in einer von einer Videokamera aufgenommenen Bildfolge.

### Beschreibung der Erfindung

Es ist eine Aufgabe der Erfindung, die oben beschriebenen Nachteile und Unwägbarkei-ten bei der Qualitätskontrolle von Porträtbildern zu beseitigen.

Diese Aufgabe wird erfindungsgemäß dadurch gelöst, dass ein Verfahren bereit gestellt wird, mittels dem für Porträtbilder vorgegebene Qualitätskriterien objektiv überprüfbar sind.

Speziell wird diese Aufgabe durch das Verfahren von Anspruch 1 gelöst.

Vorteilhafte Weiterbildungen der Erfindung werden in den Unteransprüchen angegeben.

Das erfindungsgemäße Prüfverfahren für digitalisierte Porträtbilder umfasst unter anderem die Schritte: Segmentieren des Porträtbildes in einen Hintergrundbereich und einen Kopf- oder Gesichtsbereich, Analysieren des Kopf- oder Gesichtsbereichs, um wenigstens einen Kennwert zu ermitteln, Vergleichen des wenigstens einen Kennwertes mit wenigstens einem vorbestimmten Schwellwert.

Die Schwellwerte stehen stellvertretend für Qualitätskriterien, wobei - je nach Art des Kriteriums - ein entsprechender Kennwert größer als sein zugehöriger Schwellwert, kleiner als sein zugehöriger Schwellwert, oder zwischen einem zugehörigen unteren Schwellwert und einem zugehörigen oberen Schwellwert liegen muss, um das betreffende Qualitätskriterium zu erfüllen.

Beispielsweise sind für die Bildauflösung und Bildschärfe untere Schwellwerte zweckmäßig, für die Bildgröße (Datenmenge) und Bildhelligkeit jeweils untere und ein obere Schwellwerte, für eine Verschmutzung oder andere Bildschäden (z.B. lokal beschädigte oder fehlende Bilddaten) obere Schwellwerte.

Da die Haare einer Person eine der am einfachsten manipulierbaren Eigenschaften sind, ist es in vielen Fällen zweckmäßig, zur Personenidentifizierung über einen Bildvergleich nicht den gesamten Kopf, sondern lediglich das Gesicht heranzuziehen (oder wenigstens das Gesicht deutlich stärker zu gewichten als die Haare). Die Ohren werden dabei als Bestandteil des Gesichts aufgefasst. Das Porträtbild kann in diesem Fall direkt in einen Gesichtsbereich und einen Hintergrund (Rest des Bildes) segmentiert werden. Eine unterschiedliche Gewichtung verschiedener Kopfbereiche kann erreicht werden, indem das Porträtbild in einen Hintergrund- und einen Kopfbereich segmentiert wird, und im einfachsten Fall über den Kopfbereich unterschiedliche Gewichtsfaktoren verwendet werden. In vielen Fällen ist in Ergänzung eine nichtlineare Gewichtung dieser Bereiche bevorzugt.

Eines der einfachsten Segmentierverfahren basiert auf farblicher Trennung und nimmt entweder für den Gesichtsbereich ein bestimmtes Farbspektrum und/oder für den Hintergrundbereich ein bestimmtes Farbspektrum an. Vor allem Ersteres kann in vielen Fällen durchgeführt werden, da z.B. Passbilder in der Regel vor einem unifarbenen Hintergrund aufgenommen werden. Der Segmentierschritt kann auch so durchgeführt werden, dass das Porträtbild zuerst in einen Hintergrundbereich und einen Kopfbereich segmentiert wird, und anschließend der Kopfbereich weiter in einen Gesichtsbereich und in den das Gesicht umgebenden Bereich (z.B. Haare, Hals etc.) segmentiert wird.

Ein anderes einfaches Segmentierverfahren beruht darauf, dass der Hintergrund von Porträtbildern in den meisten Fällen unscharf oder wenigstens wesentlich weniger scharf als der Kopf-/Gesichtsbereich ist. Die Unschärfe äußerst sich in - im Vergleich mit scharfen Bildbereichen - geringeren lokalen Helligkeitsvariationen und weniger abrupten Farbänderungen.

Zusätzlich oder alternativ zu diesen einfachen Segmentierungsverfahren kann zur Segmentierung ein Objekterkennungsverfahren verwendet werden, beispielsweise das in der Technik wohlbekannte Graphenanpassungsverfahren ("graph matching", vgl. deutsches Patent 44 06 020, Verfahren zur automatisierten Erkennung von Objekten) oder Weiterentwicklungen, wie die hierarchische Bildmodellanpassung HGM (vgl. europäische Patentanmeldung Nr. 01 118 536.0). Andere Objekterkennungsverfahren basieren z.B. auf Eigenwertansätzen, so das unter der Bezeichnung "Eigenfaces" bekannte Verfahren (M. Turk, A. Pentland: "Eigenfaces for recognition", Journal of Cognitive Neuroscience, 3(1), pp 71-86, 1991) oder auf der Analyse von lokalen Objekteigenschaften ("Local Feature Analysis", J.S. Penev, J.J. Atick, J.J. Local feaure analysis: A general statistical theory for object representation, Network: Computation in neural systems, 7, pp. 477-500).

In einer bevorzugten Weiterbildung des erfindungsgemäßen Verfahrens umfasst das Analysieren des Kopf- oder Gesichtsbereiches das Ermitteln wenigstens einer geometrischen Eigenschaft des Kopf- oder Gesichtsbereiches, wobei der Begriff "geometrische Eigenschaft" im weitesten Sinne zu verstehen ist: Die geometrischen Eigenschaften umfassen z.B. den Flächenanteil des Kopf-/Gesichtsbereiches im Gesamtbild, die Lage oder Orientierung des Kopf- oder Gesichtsbereiches im Bild, die Kopf-/Gesichtsform, die in der Anzahl von Bildpunkten gemessene Breite/Höhe des Kopf-/Gesichtsbereiches, etc. So wurde empirisch festgestellt, dass ein Gesicht eine minimale Auflösung von wenigstens 100 Bildpunkten in horizontaler Ausdehnung und mindestens 125 Bildpunkten in vertikaler Ausdehnung besitzen sollte, um mit einem Bildvergleichsverfahren bei einer Personenidentifizierung einigermaßen verlässliche Aussagen treffen zu können.

In einer weiteren bevorzugten Weiterbildung des erfindungsgemäßen Verfahrens umfasst das Analysieren des Kopf-/Gesichtsbereiches das Ermitteln wenigstens einer Wiedergabeeigenschaft des Kopf-/Gesichtsbereiches. Zu diesen Wiedergabeeigenschaften, die stark von den Aufnahmebedingungen beeinflusst werden, zählen der Kontrast, die Farbverteilung, die Bildschärfe, die Helligkeit, Überstrahlungen, etc. Eine weitere Wiedergabeeigenschaft ist der "Verschmutzungsgrad", der insbesondere dann eine wichtige Rolle spielt, wenn das digitalisierte Porträtbild aus einem verschmutzten oder beschädigtem Original erstellt wurde.

In einer besonders bevorzugten und vorteilhaften Weiterbildung umfasst das Analysieren des Kopf- oder Gesichtsbereiches das Lokalisieren von Subbereichen (z.B. Augen, Mund, Nase) im Kopf- oder Gesichtsbereich. Das Lokalisieren oder Extrahieren solcher Subbereiche kann beispielsweise wieder über Segmentierungsverfahren durchgeführt werden. Hierbei kann unter anderem ermittelt werden, welche Gesichtsteile auf dem Bild abgebildet (bzw. erkennbar) sind und welche nicht, ob Augen oder Mund geschlossen oder geöffnet sind, ob Hautmale oder Narben vorliegen, ob eine Brille oder Gesichts/Ohrschmuck vorhanden ist, etc. Vorzugsweise werden die lokalisierten Subbereiche nicht nur ermittelt, also ihre An- oder Abwesenheit festgestellt, sondern wiederum separat untersucht. Eine besonders wichtige Eigenschaft, die dabei ermittelt werden kann, ist die Augenfarbe; aber auch andere Eigenschaften der Augen, der Nase, des Mundes, insbesondere deren Form, können untersucht und Kennwerte entsprechend der Form, Farbe, etc. ermittelt werden.

In einer vorteilhaften Weiterbildung der oben genannten Verfahren wird als weiterer - und vorzugsweise als erster - Schritt das Porträtbild hinsichtlich globaler, d.h. für das gesamte Bild geltender Kriterien untersucht und entsprechende Kennwerte ermittelt. Zu diesen globalen Kriterien gehören: Größe, Auflösung, Grauwerte, Helligkeit, Kontrast, Farbverteilung, Farbbalance, Textur, etc. Ferner kann nach dem Segmentieren nicht nur eine Analyse des Vordergrundes (d.h. des Gesichts- oder Kopfbereiches) durchgeführt werden, sondern natürlich auch eine solche des Hintergrundbereiches. Hierbei können ebenfalls Eigenschaften wie Flächenanteil, Auflösung, Helligkeit, Kontrast, Farbe, Farbverteilung, Farbbalance, Textur, etc. untersucht werden.

Erfüllt ein Porträtbild den oben beschriebenen Verfahren wenigstens ein Qualitätskriterium oder eine vorbestimmte Anzahl und/oder Kombination von Qualitätskriterien nicht, so wird entschieden, dass das Bild die vorgegebenen Qualitätsmaßstäbe nicht erfüllt und somit zur späteren Personenerkennung, und insbesondere zur automatisierten Personenerkennung, nicht geeignet ist.

Die Qualitätskriterien können gegebenenfalls in "weiche" und "harte" Kriterien aufgeteilt werden. "Harte" Kriterien sind solche, die ohne willkürliche Annahmen nicht ohne Weiteres geändert werden können. So ist es bei roten Augen, die häufig bei mit Blitzlicht aufgenommenen Bildern auftreten, ohne Zusatzinformation i.d.R. nicht möglich, die Augenfarbe in Grün, Blau, etc. zu ändern. Liegt aber solche Information vor, so kann eine solche Korrektur durchaus vertretbar sein. "Weiche" Kriterien sind Kriterien, bei denen eine Bildkorrektur auf Grundlage begründbarer Annahmen durchgeführt werden kann, so dass das entsprechend korrigierte Bild die entsprechenden vorgegebenen Qualitätskriterien einhält. Zu diesen zählen beispielsweise Farbe, ggf. auch Helligkeit und Kontrast. Obwohl eine hohe Bildauflösung prinzipiell erwünscht ist, kann eine zu hohe Auflösung die oben beschriebenen Bildverarbeitungsverfahren derart verlangsamen, dass eine Bildkorrektur von Vorteil sein kann, bei der die Auflösung verringert wird, ohne dass dabei ein entscheidender Informationsverlust auftritt.

Das Wesen der Erfindung und bevorzugte Methoden zur Durchführung des erfindungsgemäßen Verfahrens wird nachfolgend unter Bezugnahme auf die beigefügte Figur erläutert:

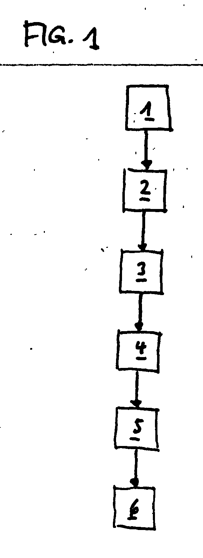

- Fig.1: ist ein schematisches Flussdiagramm einer besonders bevorzugten Ausführungsform des erfindungsgemäßen Verfahrens.

Das in Figur 1 gezeigte Flussdiagramm stellt das Ablaufschema einer Qualitätsprüfung eines Porträtbilds, dar, die gemäß den Prinzipien der vorliegenden Erfindung durchgeführt wird.

In diesem Flussdiagramm symbolisiert das Bezugszeichen 1 die Bilddigitalisierung/Bildübertragung, das Bezugszeichen 2 die Prüfung des Bildes auf globale Kriterien (d.h. für das gesamte Bild geltende Kriterien), das Bezugszeichen 3 die Segmentierung (Kopf-/Gesichtsfindung) und die Überprüfung von Kriterien im Kopf-/Gesichtsbereich und gegebenenfalls auch im Hintergrundbereich, das Bezugszeichen 4 die Überprüfung von lokalen Kriterien im Gesichtsbereich, das Bezugszeichen 5 (optionale) Bildkorrekturverfahren, und das Bezugszeichen 6 die Signalisierung des Ergebnisses und/oder den Datenexport.

Es sei darauf hingewiesen, dass die in der Figur angegebene Reihenfolge exemplarisch und nicht in allen Einzelheiten für die Erfindung zwingend ist. Beispielweise können einige Korrekturverfahren schon vor dem Block 5 durchgeführt werden.

Die im Block 1 beschriebene Bilddigitalisierung/Bildübertragung umfasst das Erzeugen eines digitalisierten Bildes (falls notwendig) und das Einlesen eines digitalisierten Bildes zu einer Rechnereinheit, die die Schritte der nachfolgenden Blöcke 2-6 durchführt.

Falls das zu untersuchende Bild (Bilddaten) nicht in digitaler Form vorliegt, so kann mittels eines Scanners daraus ein digitalisiertes Bild erzeugt werden. Falls für die Durchführung des Verfahrens ein bestimmtes Bildformat besonders erwünscht ist, so kann vor oder nach dem Einlesen noch eine Formatkonversion durchgeführt werden. Gängige Formate für digitale Bilddaten sind z.B. JPG, JPEG, TIFF, BMP, die alle in der Technik wohlbekannt sind und nicht näher beschrieben werden müssen. Das Übertragen der Bilddaten kann selbstverständlich auch über das Internet erfolgen.

Im Schritt 2 wird das eingelesene Bild hinsichtlich globaler Kriterien untersucht.

Hierzu gehören:
- die Prüfung des Kompressionsfaktors bei elektronisch übermittelten Bildern
- die Prüfung der Bildgröße/Bildauflösung
- die Prüfung der Bildschärfe
- die Prüfung [und gegebenenfalls Korrektur der globalen Bildhelligkeit]
- die Prüfung [und gegebenenfalls Korrektur] eines Grauwert- bzw. Beleuchtungsgradienten.
- die Prüfung [und gegebenenfalls Korrektur des Bildkontrastes]
- die Prüfung des Bildes auf Glanzlichter
- die Prüfung der Farbverteilung [und gegebenenfalls Korrektur der Farbbalance]
- die Überprüfung, ob "Verschmutzungseffekte" oder sonstige Störungen (z.B. Stempelaufdrucke) im Bild vorhanden sind

Bezugnehmend auf die in eckigen Klammern - die Gammakorrektur angegebenen Schritte sei ausdrücklich betont, dass die für den Block 5 angegebene Bildkorrektur - was die globalen Bildwiedergabeeigenschaften anbelangt - unter Umständen mit Vorteilen für das Verfahren - in den Block 2 vorgezogen werden kann.

Diese einzelnen Verfahrensschritte werden nachfolgend näher beschrieben.

Der Kompressionsfaktors kann beispielsweise bei elektronisch übermittelten JPEG-Bildern aus der Dateibeschreibung ermittelt werden. Der so ermittelte Kompressionsfaktor wird mit vorgegebenen Schranken verglichen. Beim Unterschreiten dieser Schwelle wird ein negatives Prüfergebnis erzielt. Für die Gesichtserkennung haben sich beispielsweise bei JPEG-Verfahren Kompressionsfaktoren über 12,5 zu 1 als problematisch erwiesen.

Danach wird das mithilfe eines Scanners digitalisierte Porträtbild oder bereits digital vorliegendende Porträtbild bezüglich seiner Bildauflösung analysiert. Die Bildauflösung in x- und y-Richtung wird mit vorgegebenen Schwellen verglichen. Im Falle der Personenerkennung hat sich für den Kopf-/Gesichtsbereich eine minimale Bildauflösung von 100 Bildpunkten (x-Richtung, Bildbreite) und 125 Bildpunkten (y-Richtung, Bildhöhe) bewährt.

Die Bildschärfe wird bevorzugt anhand der hochfrequenten spektralen Anteile im Bild beurteilt. Zur Trennung von Signal und Rauschen, welches ebenfalls hochfrequente Anteile verursacht, kann zusätzlich ein Schätzer für den Rauschprozess hinzugezogen werden und das Rauschspektrum subtrahiert werden. Die für die Gesichtserkennung relevanten spektralen Anteile können durch Berechnung der entsprechenden Ortsfrequenzen ermittelt werden. Aus Referenzbilddaten können geeignete Schwellwerte für Erwartungswert und Varianz der relevanten spektralen Anteile erfolgen, aus der die Güte der Bildschärfe bezogen auf die Aufgabe "Gesichtserkennung" ermittelt werden kann.
Die globale Bildhelligkeit ist durch den Mittelwert der Grauwerte des Bildes gegeben. Ob die Helligkeit eines Porträtbildes innerhalb eines vorgegebenen Toleranzbereiches liegt, kann durch Vergleich des mittleren Grauwertes gegen eine obere und eine untere Schwelle ermittelt werden.

Der Bildkontrast ist das Verhältnis der Helligkeiten von benachbarten Flächenelementen eines Bildes. Vereinfacht kann zur Prüfung eines Bildes auf hinreichenden Kontrast die Varianz des Bildes bzw. von Bildregionen oder das Histogramm des gesamten Bildes bzw. einer/mehrerer Subregionen ermittelt werden. Eine untere Schwelle für einen hinreichenden Kontrast kann durch statistische Analyse auf einem geeigneten Bilddatensatz ermittelt werden.

Glanzlichter, d.h. Reflektionen der Objektoberfläche infolge von übermäßiger oder gerichteter Beleuchtung, führen zu lokal begrenzten, atypischen Überstrahlungen. Überstrahlungen können durch das Erreichen von globalen Sättigungswerten oder durch deutliche lokale Helligkeitssprünge im Bild erkannt werden. Zur Minimierung von Fehlern wird neben der eigentlichen Helligkeitsanalyse vorteilhafterweise eine Flächen- und Formmessung der von der Überstrahlung betroffenen Fläche(n) durchgeführt.

Zur Überprüfung der Farbverteilung und der Farbbalance wird die vorhandene Farbinformation, die meist in RGB-Darstellung vorliegt, zunächst in einen geeigneten Farbraum transformiert (z.B. HSV: "Hue-Saturation-Value", oder HSI: "Hue-Saturation-Intensity). Anschließend wird die Statistik des vorliegenden Bildmaterials bestimmt. Geeigneterweise sollte hierbei nur die Information in der Region des Gesichtes genutzt werden, da Farbe und Beschaffenheit des Hintergrundes in der Regel unbekannt sind. Eine Ausnahme kann jedoch in Fällen vorliegen, in denen auch der Hintergrund spezifiziert ist und über die Gesamtheit des Datenbestandes weitgehend identisch sein soll.

Ist die Statistik bestimmt, kann diese mit Modellparametern verglichen werden. Dies geschieht entweder direkt z.B. über den Vergleich von Histogrammen (z.B. Minimierung der Kreuzentropie) oder über deskriptive Parameter (im einfachsten Fall z.B. über Bestimmung von Mittelwert und Varianz und Vergleich mit den entsprechenden Modellwerten; gegebenenfalls kann sich eine Transformation der Verteilungen anschließen, um die Abweichungen zu korrigieren).

Verschmutzungseffekte oder sonstige Störungen können in unterschiedlichster Weise die Bildqualität beeinflussen. Großflächige Verschmutzungen können sich z.B. in einer nicht korrigierbaren Farbbalance zeigen. Kleinere Störungen zeigen sich durch eine Residuenanalyse zwischen Original- und Mediangefiltertem Porträtbild. Alternativ oder ergänzend kommen morphologische Operatoren zum Einsatz.

Die Aussteuerung G eines Films oder einer Kamera auf eine Lichtintensität I und damit der Grauwert ist in der Regel nichtlinear sondern gehorcht einer Potenzfunktion der Form G = I^{γ}. Durch eine Änderung des Gammawertes kann die Intensitätsverteilung des Bildes nichtlinear transformiert werden. Werte für können entweder manuell und nach visueller Inspektion oder automatisch eingestellt werden. Ein Beispiel für die Gammakorrektur ist die Korrektur der bekannten Kennlinien unterschiedlicher Bildverarbeitungs- und Displayhardware (z.B. Monitorgamma, Scannergamma).

Nun zum Block 3 des in der Figur 1 gezeigten Flussdiagramms.

Ziel der Segmentierung ist es, die einzelnen Objekte einer Szene voneinander und vom Hintergrund zu trennen. Hierbei können allgemeine Verfahren zur Segmentierung von Objekten, aber natürlich besonders vorteilhaft auch spezielle Verfahren zur Segmentierung von Gesichtern zum Einsatz kommen.

Bei den allgemeinen Verfahren haben sich die unterschiedlichsten Ansätze bewährt, wie z.B. Thresholding, Multispektrales Thresholding, aber auch Pixelklassifikation und Optimierungsverfahren, die mittels Relaxation eine Segmentierung zu erreichen suchen.

Thresholding basiert beispielsweise darauf, dass sich die Objekte vom Hintergrund durch ihren Grauwert unterscheiden und findet daher fast ausschließlich in Verfahren mit kontrollierten Randbedingungen, insbesondere kontrollierter Beleuchtung, Verwendung. Jeder Pixel wird gegen die Schwelle verglichen und je nach Ausgang der Vergleichsoperation entweder als Hintergrund oder als Objekt gekennzeichnet.

Bei den speziellen Verfahren zur Detektion und Segmentierung von Gesichtern werden oft mehrstufige Ansätze verwendet.

Vor der eigentlichen Detektion kann z.B. eine "De-Rotation" der möglichen Gesichtsregion versucht werden. Hierbei geht man von der Prämisse aus, dass ein (mit Einschränkungen) frontales Gesicht symmetrisch zur Nase ist. Die Bestimmung der Symmetrieachse z.B. durch eine Cepstrumanalyse und anschließende De-Rotation, so dass die Symmetrieachse senkrecht steht, ergibt dann eine Region, in der potentiell ein aufrechtes Gesicht enthalten ist.

Für die Gesichtsdetektion werden ebenfalls unterschiedliche Verfahren vorgeschlagen und verwendet. Näheres zu diesem Thema findet sich in den Veröffentlichungen "Neural Network-Based Face Detection", Rowley et al. , IEEE Trans. on Pattern Analysis and Machine Intelligence, Vol. 20, Nr. 1, Seiten 23-38, 1998, und "Face Detection in Color Images", Jain et al., IEEE Transactions on Pattern Analysis and Machine Intelligence, Vol. 24, Nr. 5, Seiten 696-706, 2002. So können Gesichter z.B. durch Schwellwertbildung in einem geeigneten Farbraum segmentiert werden. Andere Ansätze, z.B. von Rowley, basieren auf der Klassifikation einer pyramidialen Transformation der Bildregion durch neuronale Klassifikatoren, die anhand von Beispieldaten trainiert wurden. Ein bevorzugtes Verfahren zur Segmentierung des Gesichtes verwendet das bereits genannte Graphmatchingverfahren bzw. eine Ergänzung des Verfahrens (z.B. HGM).

Die ebenfalls noch zum Block 3 gehörige Prüfung von Merkmalen im Gesichtsbereich/Hintergrund umfasst:
- Verfahren zum Finden der Augenposition
- Verfahren zur Prüfung der Kopf-/Gesichtsposition im Bild (Abstand der Augen zueinander, Abstand zum Bildrand)
- Verfahren zum Ermitteln der Kopfgröße
- Verfahren zur Prüfung und Analyse der Kopfpose (frontoparallele Rotation; Tiefenrotation/Nickbewegungen)

Die einzelnen Verfahren werden nachfolgend näher beschrieben.

### Finden der Augenposition:

Für die Bewertung der Einhaltung einer vorgegebenen Spezifikation für ein Bild ist in der Regel die Lage der Augen von besonderem Interesse. Augenfindung ist ein in der Bildverarbeitung bereits seit langen bekanntes Problem, zu dem Lösungsansätze unterschiedlichster Komplexität vorgeschlagen werden:
Jain et al. (s.o.) schlagen ein Verfahren vor, bei dem - basierend auf einer initialen Detektion des Gesichtes - die Augen anhand der Verteilung von Chrominanz und Luminanz im Gesicht detektiert werden. Die ursprünglichen Farbverteilungen werden morphologischen Operationen unterzogen und anschließend mittels Thresholding auf einer Bildpyramide detektiert.

Andere Verfahren basieren auf Mustervergleichsverfahren, entweder implizit mittels neuronaler Klassifikatoren, oder aber explizit durch Modellierung und Vergleich der geometrischen Eigenschaften (z.B. in Form der Suche nach den Kreisen der Umrandung der Pupille, den Bögen der Augenbrauen etc.).

### Prüfung der Augenposition im Bild:

Für eine günstige Positionierung des Gesichtes innerhalb des Bildes kann hilfsweise der Abstand der Augen vom Bildrand benutzt werden. Es wird der in Bildpunkten berechnete Abstand des linken Auges zum oberen und unteren Bildrand ermittelt und mit vorgegebenen Schranken verglichen. Analoge Messungen werden für das rechte Auge durchgeführt. Aus empirischen Untersuchungen haben sich Schwellwerte von etwa 40 Pixel für den Abstand der Augen zum jeweiligen Bildrand und etwa 80 Pixel für den Abstand der Augenachse zum unteren zur unteren Bildkante bewährt.

### Prüfung des Augenabstandes:

Nach Ermittlung der Augenposition im Bild wird die Distanz zwischen diesen Positionen ermittelt und mit einer gegebenen Schwelle verglichen. Als vorteilhaft für die Personenidentifikation hat sich ein Abstand von mindestens 50 Pixel (Bildpunkten) zwischen den Augenzentren erwiesen.

### Prüfung der frontoparallelen Rotation:

Die Prüfung des Portraits auf frontoparallele Rotation erfolgt durch Berechnung des Drehwinkels des Gesichtes bezogen auf eine Normalachse. Bei bekannter Lage der Augenzentren kann durch Ermittlung des projektierten Augenabstandes in x- und y-Richtung und durch entsprechende trigonometrische Beziehungen dieser Drehwinkel berechnet werden. Da eine exakte Ermittlung der Augenzentren auch infolge etwaiger Bildstörungen oftmals problematisch ist, kann alternativ oder ergänzend das folgende robustere Verfahren durchgeführt werden:
1. Erzeugen einer verschiebungsinvarianten Repräsentation des Bildes, welche jedoch noch Rotationsinformation enthält. Diese ist beispielsweise gegeben durch den Betrag der Fourier-Transformierten des Bildes.
2. Erzeugen einer verschiebungsinvarianten Repräsentation des gespiegelten Bildes.
3. Messung der Verschiebung des Drehwinkels in dieser Repräsentation beispielsweise durch Transformation in Polarkoordinaten und Messung der Verschiebung entlang des Winkels beispielsweise durch korrelationsbasierte Verfahren

Für die Prüfung der Bildqualität wird der berechnete Drehwinkel mit vorgegebenen Schwellen verglichen. Gegebenenfalls kann das Bild durch eine entsprechende lineare Bildoperation so gedreht werden, dass das resultierende Bild nicht mehr gedreht ist oder innerhalb der vorgegebenen Schwellen liegt.

### Prüfung der Tiefenrotation:

Aus einem Satz von Punktkorrespondenzen (von 8 oder mehr Punktepaaren) zwischen Bild und einem Modell kann mit Hilfe des in der Literatur als 8-Point-Algorithmus bekannten Verfahrens die relative Drehung im Raum bestimmt werden (Fundamental Matrix/Essential Matrix.)

Als Literaturangaben zu den letztgenannten Verfahren seien genannt: "Complete Dense Estimation using Level Set Methods", O. Faugeras und R. Keriven, European Conference on Computer Vision, 1998; sowie "The Fundamental Matrix: Theory, Algorithms, and Stability Analysis", Q.T. Luong und O. Faugeras, 1995.

Die Kompensation der Tiefenrotation kann beispielsweise durch Adaption der Parameter eines 3D-Kopfmodells erfolgen, auf das die Farb- bzw. Grauwerte des vorliegenden Gesichts projiziert werden. Das so berechnete 3D-Modell des Bild wird anschließend um die vorher ermittelten Rotationsparameter derotiert, vorzugsweise in eine Normansicht.

Für die Prüfung der Bildqualität werden auch im Falle der Tiefenrotation die berechneten Drehwinkel mit vorgegebenen Schwellen verglichen. Durch das beschriebene Verfahren kann gegebenenfalls das Bild so transformiert werden, dass das resultierende Bild nicht mehr gedreht ist oder wieder innerhalb der vorgegebenen Schwellen liegt.

Neben der optimalen Aufnahme des Kopf-/Gesichtsbereichs ist aber auch der Verlauf des Hintergrundes für eine optimale Bilderkennung von Bedeutung. Für Passfotos werden deshalb typischerweise Vorgaben hinsichtlich eines einheitlichen, farblich homogenen Hintergrundes gemacht. Nach erfolgter Objektlokalisierung und -segmentierung (d.h. des Kopfes oder des Gesichtes) kann der Hintergrund ("Restbild") mit den bereits beschriebenen Verfahren auf Helligkeit (mittlere Helligkeit, Varianz), Kontrast, Farbe und Textur analysiert werden. Bei Überschreiten von typischen Grenzwerten können ungeeignete Bilder, d.h. solche, bei dem der Hintergrund für den Betrachter als unruhig oder ' dominant angesehen wird, zurückgewiesen oder einem Korrekturverfahren zugeführt werden, bei welchem der Hintergrund durch elektronische Bildmanipulation gegen einen geeigneteren Hintergrund ersetzt wird. Für den pixelweisen Austausch bilden sich vorteilhafterweise Hintergründe an, die eine konstante Helligkeit und Farbe aufweisen.

Falls der im Bild sichtbare Objekthintergrund nicht den Prüfbedingungen genügt, kann dieser durch Bildmanipulationstechniken durch einen anderen Hintergrund ersetzt werden, der den Prüfbedingungen entspricht. Dies wird durch pixelweises Überschreiben der während der Segmentierung als Bildhintergrund markierten Bereichs realisiert, wobei im einfachsten Fall jedem Bildpunkt eine konstante Farbe und Helligkeit zugeordnet wird. Die Selektion einer günstigen Hintergrundfarbe und Helligkeit kann vorteilhafterweise auch durch Berücksichtigung des betrachteten Objektes selbst geschehen, so dass der Kontrastunterschied zwischen Objekt und Hintergrund optimiert wird.

Nun zu Block 4, d.h. dem Überprüfen lokaler Kriterien im Kopf-/Gesichtsbereich.

Hierbei sei zuallererst die Prüfung des Bildbereichs auf Vollständigkeit genannt, z.B. Prüfung, ob beide Augen, Nase, Mundpartie sichtbar sind, ob Gesichtsbegrenzung aus dem Bild "herausläuft" (Segmentierung vollständig innerhalb des Bildes).

Zur Überprüfung, ob alle wesentlichen Teile des Gesichts sichtbar sind, bietet sich z.B. ein Verfahren auf Basis eines Graphmatchingverfahrens (z.B. HGM) an. Nach erfolgtem Matching (d.h. Anpassung) und Platzieren der Knoten, welche auf der Gesamtbewertung des Graphen beruhen und damit von lokalen Störungen nur wenig beeinflusst werden, können die Ähnlichkeiten der lokalen Knoten oder Knotengruppen bewertet werden. Dies geschieht entweder dadurch, dass geprüft wird, ob die Ähnlichkeit zu Modellknoten (z.B. in Form von Beispielen) groß genug ist, oder aber explizit durch Klassifikation zwischen dem betrachteten Positiv- und dem zugehörigen Negativfall (z.B. Ähnlichkeit zu "normalem" geöffneten Auge, geschlossenem Auge, Augenklappe).

Zusätzlich kann durch Vergleich der Maxima und Minima der Koordinaten des positionierten Graphen mit den Bilddimensionen geprüft werden, ob (a) das Gesicht im Bild vollständig vorhanden ist, und (b) Größe und Position des Gesichtes mit den Vorgaben im Rahmen der ebenfalls vorgegebenen tolerierbaren Abweichungen übereinstimmen.

In speziellen Fällen kann es nützlich sein, das Tragen von Brillen separat zu detektieren. So ist z.B. denkbar, dass die Vorgaben nur Bildaufnahmen ohne Brille gestatten.

Ein mögliches Verfahren hierfür ist die Verwendung des von L. Wiskott erstmals beschriebenen Verfahrens des Bunchgraphmatchings mit annotierten Graphen: "Face recognition and gender determination", L. Wiskott et.al., International Workshop on Automatic Face- and Gesture-Recognition, Seiten 92-97, Zürich, 26.-28.06.1995. Hierbei wird nach erfolgter Platzierung des Graphen geprüft, welcher Knoten des Graphstacks dem Knoten des aktuellen Graphen am ähnlichsten ist. Wurden der Graphstack zuvor annotiert, z.B. in der Form, dass das zugehörige Bild einen Brillenträger zeigt, so wird diese Annotation auch dem aktuellen Knoten zugewiesen. Durch abschließende Auswertung der Annotationen aller aktueller Knoten (z.B. Mehrheitsentscheid) kann auf das Tragen bzw. nicht Tragen einer Brille im aktuellen Bild geschlossen werden.

Von besonderer Bedeutung ist die Überprüfung - und gegebenenfalls die Manipulation - der Augenpartie.

Ein Ansatz zur Unterscheidung zwischen geschlossenen und offenen Augen wurde bereits oben skizziert. Nach erfolgter Graphpositionierung kann insbesondere auf einfache Weise aus der Auswertung der Farbinformation an der Position der Augenknoten auf das im Zusammenhang mit der Verwendung von Blitzlichtern auftretende "rote Augen" Problem geschlossen werden. Ebenso ist eine Korrektur durch Veränderung der Farbinformation in der entsprechenden Region möglich.

Für die Überprüfung der Mundregion gilt sinngemäß das gleiche wie für den Augenbereich. Zusätzlich ergibt sich jedoch noch die Möglichkeit, die Abweichung der Lage der aktuellen Knotenpositionen von den Knoten entsprechender Knoten von Referenzmodellen zu bewerten, z.B. in Form der Summe des Absolutbetrages aller Positionsabweichungen gegenüber den Referenzknoten im Falle eines offenen bzw. eines geschlossenen Mundes. Die Entscheidung kann dann im einfachsten Fall durch Vergleich mit einer Schwelle getroffen werden.

Die Prüfung auf eine Kopfbedeckung lässt sich gemäß dem folgenden pragmatischen Ansatz durchführen: Nach erfolgreicher Graphpositionierung können die Knoten, die die obere Kopfumrandung beschreiben, ausgewertet werden. Hierbei bietet sich die Überprüfung der Farbe und der Form an. Erstere ist durch Analyse des Originalbildes, letztere durch Ähnlichkeit mit Modellbildern möglich. Ergeben sich signifikante Abweichungen in einem der beiden Fälle, könnte eine Kopfbedeckung vorliegen. Derartige Bilder sollten zur Sicherheit der visuellen Inspektion durch einen menschlichen Operator zugeführt werden (→ Block 6).

Nun wird auf Block 5 (Bildkorrektur) Bezug genommen, sofern die entsprechenden Verfahren nicht schon in einen der vorangegangenen Blöcke 2 bis 4 vorgezogen und bereits oben beschrieben wurden.

Hierbei sind insbesondere Verfahren zur Kontrast-, Helligkeits- und Farbkorrektur im Kopf-/Gesichtsbereich zu nennen. In Ergänzung zu den bereits genannten Korrekturverfahren ("Manipulationsverfahren") werden hierbei Korrekturen nicht global, sondern auf den Kopf-/Gesichtsbereich beschränkt durchgeführt. Die genannten histogrammbasierten Adaptionsverfahren oder Farbraumtransformationen sind entsprechend auf diese durch Segmentierung erhaltenen Bereiche umzusetzen.

Abschließend wird auf Block 6 von Figur 1 Bezug genommen.

Nach Durchführen der oben genannte Verfahren muss an einen Nutzer signalisiert werden, ob das dem Prüfverfahren zugrundeliegende Bild (oder gegebenenfalls das korrigierte Bild) den vorgegebenen Qualitätskriterien entspricht. Ist dies der Fall, so kann das Bild (oder gegebenenfalls das korrigierte Bild) z.B. in eine Datenbank aufgenommen werden, auf ein Identitätsdokument übertragen werden, etc.

Das anhand der Figur beschriebene Verfahren dient lediglich zur Veranschaulichung der Prinzipien, auf denen die vorliegende Erfindung basiert. Der Schutzumfang der Erfindung wird durch die nachfolgenden Patentansprüche definiert.

## Patentansprüche

1. Prüfverfahren für digitallsierte Porträtbilder zum Überprüfen der Eignung eines Porträtbildes für eine spätere Personenidentifizierung, mit den Schritten:
Segmentieren des Porträtbildes in einen Hintergrundbereich und einen Kopf- oder Gesichtsbereich,
Analysieren des Kopf- oder Gesichtsbereichs, um wenigstens einen Kennwert zu ermitteln,
Vergleichen des wenigstens einen Kennwerts mit wenigstens einem vorbestimmten Schwellwert als Qualitätskriterium der Eignung, und
Signalisieren, ob das Porträtbild dem wenigtens einen vorbestimmten Qualitätskriterium der Eignung entspricht.

2. Verfahren nach Anspruch 1, bei welchem das Segmentieren das Durchführen eines Objekterkennungsverfahrens umfasst.

3. Verfahren nach einem der vorangegangenen Ansprüche, bei welchem das Analysieren des Kopf- oder Gesichtsbereichs das Ermitteln wenigstens einer geometrischen Eigenschaft des Kopf- oder Gesichtsbereichs umfasst.

4. Verfahren nach Anspruch 3, bei welchem die wenigstens eine zu ermittelnde geometrische Eigenschaft des Kopf- oder Gesichtsbereichs eine Größe und/oder Form und/oder Lage und/oder Orientierung des Kopf- oder Gesichtsbereichs in dem Porträtbild umfasst.

5. Verfahren nach einem der vorangegangenen Ansprüche, bei welchem das Analysieren des Kopf- oder Gesichtsbereichs das Ermitteln wenigstens einer Wiedergabeeigenschaft des Kopf- oder Gesichtsbereichs umfasst.

6. Verfahren nach Anspruch 5, bei welchem die wenigstens eine zu ermittelnde Wiedergabeeigenschaft einen Kontrast und/oder eine Farbverteilung und/oder eine Bildschärfe und/oder eine Helligkeit und/oder einen Verschmutzungsgrad und/oder ein Maß für eine Überstrahlung im Kopf- oder Gesichtsbereich umfasst.

7. Verfahren nach einem der vorangegangenen Ansprüche, bei welchem das Analysieren des Kopf- oder Gesichtsbereichs das Lokalisieren von Subbereichen im Kopf- oder Gesichtsbereich umfasst.

8. Verfahren nach Anspruch 7, mit dem weiteren Schritt:
Analysieren des wenigstens einen lokalisierten Subbereichs.

9. Verfahren nach einem der vorangegangenen Ansprüche, mit dem Schritt:
Analysieren des Porträtbildes hinsichtlich globaler Kriterien, die für das gesamte Porträtbild gelten.

10. Verfahren nach einem der vorangegangenen Ansprüche, mit dem Schritt:
Analysieren des Hintergrundbereichs des Porträtbildes.

## Claims

1. Method for verifying digitized portraits for verifying the suitability of a portrait for a subsequent person identification, with the steps:
segmenting the portrait into a background area and a head or face area,
analyzing the head or face area to determine at least one characteristic value,
comparing the at least one characteristic value with at least one predetermined threshold value as a quality standard for the suitability, and
signalizing if the portrait observes the at least one quality standard for the suitability.

2. Method according to claim 1, wherein the step of segmenting comprises performing a method for object recognition.

3. Method according to one of the preceding claims, wherein analyzing the head or face area comprises detecting at least one geometric feature of the head or face area.

4. Method according to claim 3, wherein detecting at least one geometric feature of the head or face area comprises a size and/or shape and/or position and/or spatial orientation of the head or face area within the portrait.

5. Method according to one of the preceding claims, wherein analyzing the head or face area comprises detecting at least one reproduction feature of the head or face area.

6. Method according to claim 5, wherein the at least one reproduction feature that is to be detected comprises a contrast and/or a color distribution and/or a sharpness of the image and/or a brightness and/or a grade of staining and/or a measure for the irradiation of the head or face area.

7. Method according to one of the preceding claims, wherein analyzing the head or face area comprises localizing sub-regions of the head or face area.

8. Method according to claim 7 with the additional step:
analyzing the at least one localized sub-region.

9. Method according to one of the preceding claims with the step:
analyzing the portrait with respect to global criteria that apply to the entire portrait.

10. Method according to one of the preceding claims with the step:
analyzing the background area of the portrait.

## Revendications

1. Procédé de contrôle pour photos numérisées, pour vérifier qu'une photo est apte à une identification de personne ultérieure, comprenant les étapes qui consistent :
- à segmenter la photo en une zone d'arrière-plan et une zone de la tête ou du visage,
- à analyser la zone de la tête ou du visage pour déterminer au moins une valeur caractéristique,
- à comparer la ou les valeurs caractéristiques à au moins une valeur seuil prédéfinie, comme critère de qualité de l'aptitude, et
- à faire savoir si la photo correspond audit critère de qualité d'aptitude prédéfini.

2. Procédé selon la revendication 1, selon lequel la segmentation comprend la mise en oeuvre d'un procédé d'identification d'objet.

3. Procédé selon l'une des revendications précédentes, selon lequel l'analyse de la zone de la tête ou du visage comprend la recherche d'au moins une caractéristique géométrique de la zone de la tête ou du visage.

4. Procédé selon la revendication 3, selon lequel la ou les caractéristiques géométriques de la zone de la tête ou du visage à rechercher comprend une taille et/ou une forme et/ou une position et/ou une orientation de la zone de la tête ou du visage dans la photo.

5. Procédé selon l'une des revendications précédentes, selon lequel l'analyse de la zone de la tête ou du visage comprend la recherche d'au moins une caractéristique de reproduction de la zone de la tête ou du visage.

6. Procédé selon la revendication 5, selon lequel la ou les caractéristiques de reproduction à rechercher comprennent un contraste et/ou une répartition de couleur et/ou une netteté d'image et/ou une luminosité et/ou un degré de salissure et/ou une mesure de brillance excessive dans la zone de la tête ou du visage.

7. Procédé selon l'une des revendications précédentes, selon lequel l'analyse de la zone de la tête ou du visage comprend la localisation de sous-zones dans la zone de la tête ou du visage.

8. Procédé selon la revendication 7, comprenant l'étape supplémentaire qui consiste :
- à analyser la ou les sous-zones localisées.

9. Procédé selon l'une des revendications précédentes, comprenant l'étape qui consiste :
- à analyser la photo par rapport à des critères globaux qui sont valables pour toute la photo.

10. Procédé selon l'une des revendications précédentes, comprenant l'étape qui consiste :
- à analyser la zone d'arrière-plan de la photo.
